# EUROPEAN PATENT SPECIFICATION

(11) **EP 3 166 748 B1**
(45) Date of publication and mention of the grant of the patent: **18.09.2019**
(21) Application number: 14744197.6
(22) Date of filing: 10.07.2014
(51) Int. Cl.: B23K 37/04, B23K 20/12

(54) **FLOATING FIXTURE FOR FRICTION STIR WELDING**
SCHWEBENDE BEFESTIGUNG FÜR RÜHRREIBSCHWEISSEN
MONTURE FLOTTANTE POUR SOUDAGE PAR FRICTION-MALAXAGE

(43) Date of publication of application: 17.05.2017
(73) Proprietor: ESAB AB, 402 77 Göteborg (SE)
(72) Inventor: LARSSON, Rolf Håkan, S-69532 Laxå (SE); KARLSSON, Sievert K.G., S-70932 Vintrosa (SE)
(74) Representative: Duxbury, Stephen
(86) International application number: PCT/IB2014/063004
(87) International publication number: WO 2016/005794

(56) References cited:
- EP-A2- 1 057 576
- JP-A- 2000 135 577
- US-B1- 6 299 050
- US-B1- 6 302 315

## Description

### Field of the Disclosure

The disclosure relates generally to the field of welding fixtures, and more particularly to a movable welding fixture for securing large workpieces during friction stir welding.

### Background of the Disclosure

Large-scale welding operations, such as those that involve friction stir welding two or more very large workpieces (e.g., roof panels of railcars) together, often require that the workpieces be held firmly in place during welding. This is necessary to ensure that tight, even seams are formed at the junctures of the workpieces and to prevent the workpieces from warping or otherwise moving out of position during the friction welding operation.

One solution that has been devised for securing workpieces during large-scale friction stir welding operations involves laying workpieces on a large bed or other support structure in a desired configuration, such as in horizontal abutment with one another to form one or more seams that are to be joined. A plurality of clamps, such as may be rigidly mounted to the bed, are disposed about the perimeter of the abutting workpieces. The clamps are employed to fasten the edges of the workpieces to the bed and to hold the workpieces in firm horizontal abutment with one another. With the workpieces secured thusly, friction stir welding of the seams may be performed.

One shortcoming that is associated with the above-described solution is that a large number of clamps must be employed to properly secure large workpieces. The necessary structure for implementing the solution may therefore be very expensive. Another shortcoming associated with the solution is that each of the clamps must be individually positioned and fastened prior to commencement of a welding operation. This can be very time consuming and labor intensive, especially if the configuration of the clamps must be changed frequently to accommodate different welding applications.

A fixture with a gantry formed by one single girder and two vertical support members, said gantry having an attached pressure unit, is known from patent document US 6,299,050.

### Summary

In view of the foregoing, it would be advantageous to provide a fixture for securing workpieces during large-scale friction stir welding operations, wherein the fixture has a relatively low cost, requires minimal time and labor to configure, and can be easily and expeditiously reconfigured to accommodate different friction stir welding applications.

An exemplary welding fixture in accordance with the present disclosure may include a movable gantry configured to span the workpieces. The welding fixture may further include a plurality of pressure units suspended from the gantry, where the pressure units are configured to controllably apply a force to the workpieces during welding. The gantry may be configured to move over the workpieces in a welding direction while the pressure units maintain a force on the workpieces and while welding heads that are positioned behind the pressure units weld the workpieces together.

An exemplary method for securing workpieces during friction stir welding in accordance with the present disclosure may include positioning a gantry over the workpieces, applying a force to the workpieces using a pressure unit attached to the gantry, moving the gantry over the workpieces while maintaining engagement between the pressure unit and the workpieces, and welding the workpieces together as the gantry is moved.

### Brief Description of the Drawings

**FIG. 1** is a perspective view illustrating an exemplary welding fixture in accordance with the present disclosure.
**FIG. 2** is an end view of the welding fixture of **FIG. 1** positioned over a plurality of workpieces to be welded together.
**FIG. 3** is a side view of the welding fixture of **FIG.** 1.
**FIG. 4** is a cross sectional view of a pressure unit of the welding fixture of **FIG. 1** taken along the plane *A-A* in **FIG. 3****,** with a piston of the pressure unit in a retracted position.
**FIG. 5** is a cross sectional view illustrating the pressure unit shown in **FIG. 4****,** with the piston of the pressure unit in an extended position.
**FIG. 6** is an exploded view illustrating an exemplary manner in which the pressure unit shown in **FIG. 4** may be coupled to a girder of the welding fixture of the present disclosure.
**FIG. 7** is a perspective view illustrating the position of the welding fixture of the present disclosure relative to a welding station.
**FIG. 8** is a flow diagram illustrating an exemplary method of implementing the welding fixture of the present disclosure.

### Detailed Description

An apparatus and method in accordance with the present disclosure will now be described more fully hereinafter with reference to the accompanying drawings, in which preferred embodiments of the device are shown. The disclosed apparatus and method, however, may be embodied in many different forms and should not be construed as being limited to the embodiments set forth herein. Rather, these embodiments are provided so that this disclosure will be thorough and complete, and will fully convey the scope of the apparatus and method to those skilled in the art. In the drawings, like numbers refer to like elements throughout.

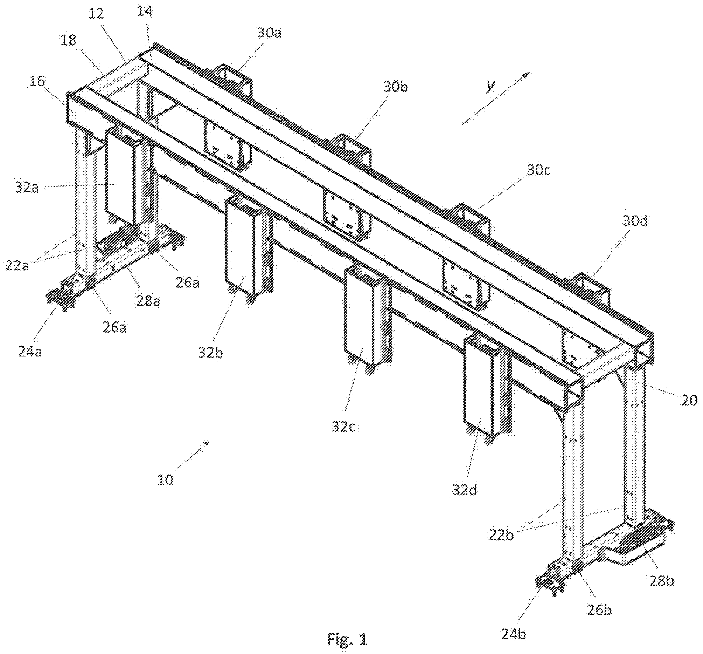

Referring to **FIG. 1**, an exemplary embodiment of a floating welding fixture 10 (hereinafter "the welding fixture 10") in accordance with the present disclosure is shown. For the sake of convenience and clarity, terms such as "top," "bottom," "upper," "lower," "vertical," "horizontal," "lateral," "longitudinal," "height," and "width" will be used herein to describe the relative placement and orientation of the gantry 10 and its various components, each with respect to the geometry and orientation of the welding fixture 10 as it appears in **FIG. 1****.** Said terminology will include the words specifically mentioned, derivatives thereof, and words of similar import.

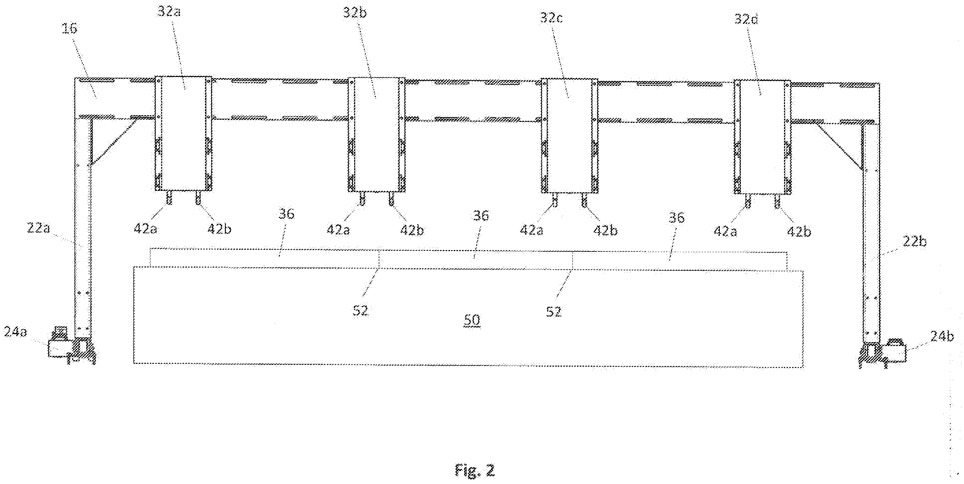

The welding fixture 10 may include a movable gantry 12 that supports a plurality of pressure units 30a-d, 32a-d that are configured to forcibly secure one or more workpieces 36 (shown in **FIG. 2**) that are being subjected to a friction stir welding operation as will be further described below. As best shown in **FIG. 1**, the gantry 12 may be of a double-girder variety having first and second laterally-spaced girders 14, 16 that are secured to one another in a parallel relationship by laterally-extending cross-members 18, 20. The girders 14, 16 may be supported at their longitudinal ends by respective pairs of vertical support members 22a, 22b. Each pair of vertical support members 22a, 22b may be attached at its lower end to a respective motor-driven carriage 24a, 24b (described in greater detail below). The height and width of the gantry 12 may be sufficient such that the girders 14, 16 are disposed above one or more workpieces 36 that are to be welded (as shown in **FIG. 2**, for example) and may therefore be varied to suit a particular application.

Many variations of the above-described configuration of the gantry 12 are contemplated and may be implemented without departing from the present disclosure. For example, it is contemplated that the gantry 12 may alternatively include only a single girder or only a single vertical support member at each longitudinal end of the girder(s). It is further contemplated that the girders 14, 16 and/or the vertical support members 22a, 22b may be formed of multiple telescoping members for allowing the width and/or height of the gantry 12 to be adjusted.

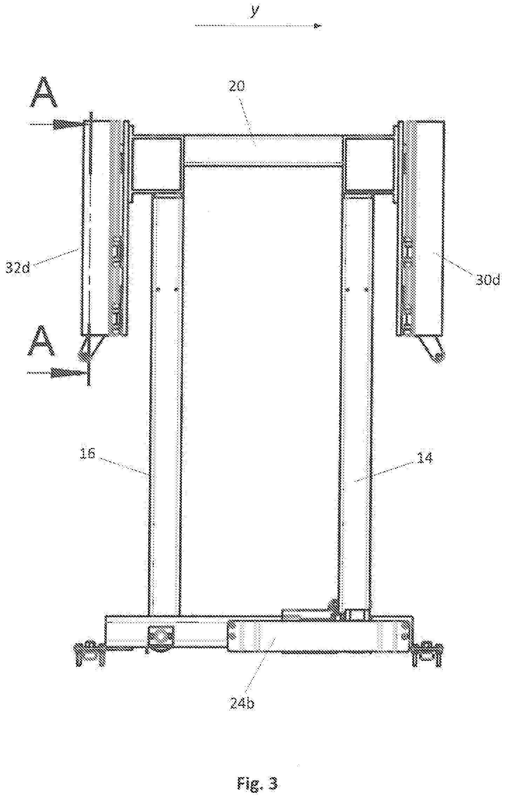

The motor-driven carriages 24a, 24b (hereinafter "the carriages 24a, 24b) may be adapted to move the gantry 12 in the *γ*-direction shown in **FIGS. 1** and **3****.** For example, each of the carriages 24a, 24b may be provided with a respective pair of wheels 26a, 26b (only one of the wheels 26b is visible in **FIG. 1**) and a respective drive mechanism 28a, 28b adapted to rotatably drive one or more of the wheels 26a, 26b. The drive mechanisms 28a, 28b may include, but are not limited to, electric motors, hydraulic motors, pneumatic motors, etc. It is contemplated that the carriages 24a, 24b may be freely situated atop a surface, such as a floor of a plant or processing facility. Alternatively, it is contemplated that the carriages 24a, 24b may be fixed within tracks or channels (not shown) for confining movement of the carriages 24a, 24b to a specific direction or axis (e.g. the *y*-direction).

The welding fixture 10 may also include a plurality of front pressure units 30a, 30b, 30c, 30d suspended from the girder 14 in a longitudinally-spaced relationship and a similar plurality of rear pressure units 32a, 32b, 32c, 32d suspended from the girder 16 in a longitudinally-spaced relationship. Each of the front pressure units 30a-d may be laterally aligned with one of the rear pressure units 32a-d, but this is not critical. As illustrated by the rear and side views of the welding fixture 10 shown in **FIGS. 2** and **3**, respectively, the front and rear pressure units 30a-d, 32a-d may extend a distance below the girders 14, 16, with the lower termini of the pressure units 30a-d, 32a-d located a distance above the workpieces 36 to be welded. As will be described in greater detail below, each of the front and rear pressure units 30a-d, 32a-d may include a pluraltiy of pressure rollers 42a, 42b that are configured to contact the workpieces 36. While the welding fixture 10 is shown as having four front pressure units 30a-d and four rear pressure units 32a-d, it is contemplated that the welding fixture 10 may be provided with a greater or fewer number of front and/or rear pressure units without departing from the present disclosure.

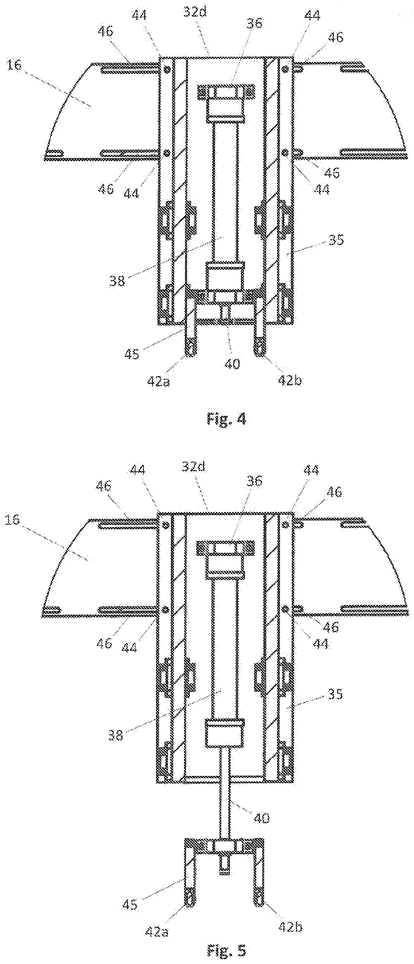

**FIG. 4** illustrates a cross section of the pressure unit 32d taken along the plane *A-A* shown in **FIG. 3****.** The pressure unit 32d is substantially identical to the pressure units 30a-d, 32a-c shown in **FIG. 1****.** It will therefore be understood that the following description of the pressure unit 32d may also apply to each of the other pressure units 30a-d, 32a-c.

As shown in **FIG. 4****,** the pressure unit 32d may include a housing 35 containing a vertically-oriented linear drive mechanism 36. The linear drive mechanism 36 may be embodied by any type of suitable linear actuator or linear motion device, including, but are not limited to, a hydraulic actuator, a pneumatic actuator, and the like. The linear drive mechanism 36 may include a cylinder 38 and a movable piston 40. A pair of pressure rollers 42a, 42b may be rotatably coupled to a U-shaped bracket 45 that may in-turn be coupled to a lower end of the piston 40. The linear drive mechanism 36 may be operatively connected to an automatically or manually operated controller (not shown) for allowing the piston 40 and the pressure rollers 42a, 42b to be controllably extended and retracted relative to the cylinder 38 between a retracted position (shown in **FIG. 4**) and an extended position (shown in **FIG. 5**). The pressure rollers 42a, 42b may thereby be controllably lowered into engagement with workpieces that are to be welded. Particularly, the pressure rollers 42a, 42b may impart a downward force on a workpiece while freely passing (rolling) over the workpiece in the *y-*direction (as further described below) without damaging the workpiece. Of course, it is contemplated that a variety of other structures may be substituted for the pressure rollers 42a, 42b without departing from the present disclosure. For example, the pressure rollers 42a, 42b may be replaced by one or more fixedly-coupled (i.e., non-rotating) feet, such as may be formed of a low friction material for imparting a downward force on a workpiece while sliding over the workpiece without causing damage thereto.

The linear drive mechanism 36 may be provided with one or more devices for measuring an amount of force that is applied to a workpiece. For example, the linear drive mechanism 36 may be provided with force sensors (not shown) that may be configured to measure hydraulic pressure on the positive and negative sides of the cylinder 68. In another non-limiting embodiment, the linear drive mechanism 36 may be provided with an electromechanical force/position unit combined with a load cell for measuring an amount of force applied by the linear drive mechanism 36. The measured pressure or force may be communicated to the controller (described above) which may in-turn move the piston 40 up or down to maintain a predefined force on a workpiece.

The pressure unit 32d may be coupled to the girder 16 in manner that allows adjustment of the pressure unit's longitudinal position along the girder 16. For example, as shown in **FIG. 4**, the pressure unit 32d may be attached to the girder 16 by mechanical fasteners 44 (e.g., nut and bolt combinations) that extend through longitudinally-elongated slots or channels 46 in the girder 16. To change the longitudinal position of the pressure unit 32d, an operator may loosen the mechanical fasteners 44 and may slide the pressure unit 32d to a new longitudinal position along a slot 46 where the mechanical fasteners 44 may be retightened. Of course, the pressure unit 32d may also be entirely removed from the girder 16 and refastened at a different longitudinal position using an entirely different set of slots 46. Alternatively, it is contemplated that the pressure unit 32d may be mounted on a longitudinally-oriented linear drive mechanism (e.g., any variety of linear actuator) that is mounted on the girder 16, thereby facilitating automatic adjustment of the pressure unit's longitudinal position. For example, such automatic adjustment may be effectuated via a remote control device that is operatively connected to the aforementioned linear drive mechanism.

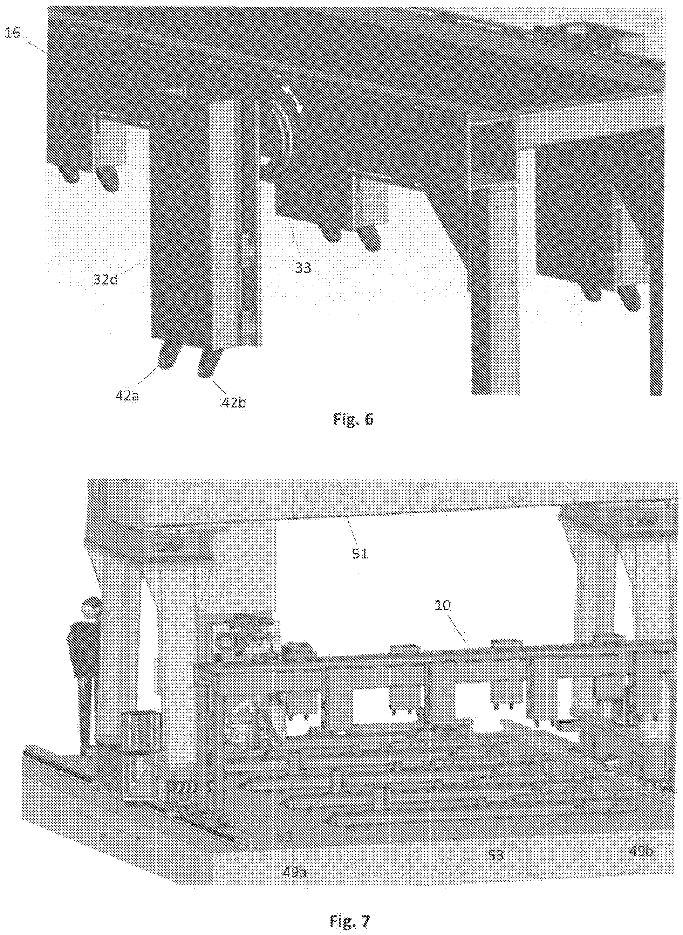

The pressure unit 32d may also be coupled to the girder 16 in manner that allows adjustment of the pressure unit's angular orientation relative to the girder 16. For example, referring to **FIG. 6**, the pressure unit 32d may be rotatably coupled to the girder 16 by a bearing unit 33. The bearing unit 33 may be motorized and may include a toothed rack for allowing the angular position of the pressure unit 32d to be adjusted automatically. Alternatively, the pressure unit 32d may be manually rotatable on the bearing unit 33, and the bearing unit may include a manually-actuated locking device for securing the pressure unit 32d in a desired angular orientation.

It will be appreciated that many other configurations and/or structures may be employed for mounting the pressure unit 32d to the girder 16 in a manner that facilitates manual or automatic adjustment of the pressure unit's longitudinal position and/or angular orientation on the girder 16. All such configurations and structures are contemplated and may be implemented without departing from the present disclosure.

Referring to **FIG. 7**, the welding fixture 10 is shown mounted on a pair of rails 49a, 49b in front of a welding station 51 that may be mounted on the same pair of rails 49a, 49b. During operation of the welding fixture 10 and welding station 51, the welding fixture 10 and welding station 51may move along the rails 49a, 49b in the *y*-direction at a fixed distance apart as further described below. The welding fixture 10 and welding station 51 may be driven by a common drive mechanism or by separate drive mechanisms. Alternatively, it is contemplated that the welding fixture 10 may be mounted directly to the front of the welding station 51. A bed of laterally-adjustable side supports 53 may be located below the welding fixture 10 and the welding station 51for securing and preventing lateral movement of workpieces that are to be welded. For example, the side supports 53 may be used to hold workpieces in firm lateral abutment with one another.

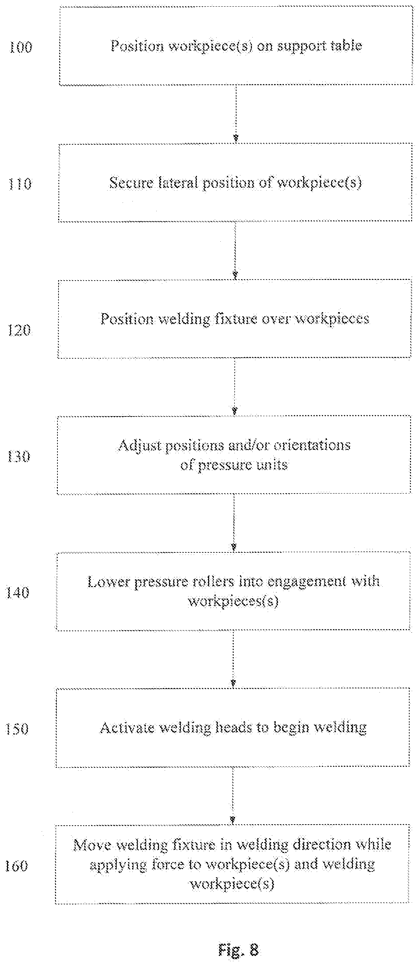

Referring to **FIG. 8**, a method for operating the welding fixture 10 in accordance with the present disclosure will now be described, with reference to the welding fixture 10 as shown in **FIGS. 1-3** and 7.

At a first step 100 of the exemplary method, one or more workpieces 36 that are to be welded may be positioned on a support table 50 or other support surface as shown in **FIG. 2****.** The workpieces 36 may be positioned in a configuration in which they are to be welded to together, such as in a side-by-side, abutting relationship, forming seams 52. At step 110, laterally adjustable side supports, such as the side supports 53 shown in **FIG. 7**, may be moved into engagement with the lateral sides of the workpieces 36 in order to hold the workpieces 36 in firm lateral abutment with one another.

At step 120 of the exemplary method, the welding fixture 10 may be positioned over the workpieces 36 as shown in **FIG. 2**, with the girders 14, 16 (the girder 14 is not visible in **FIG. 2**) and the front and rear pressure units 30a-d, 32a-d (the front pressure units 30a-d are not visible in **FIG. 2**) spanning over the workpieces 36. At step 130 of the method, the longitudinal positions and/or angular orientations of the pressure units 30a-d, 32a-d may be adjusted (in the manner described above) as necessary. For example, one or more of the pressure units 30a-d, 32a-d may be positioned with their pressure rollers 42a, 42b spanning across respective seams 52 as shown in **FIG. 2****.**

At step 140 of the exemplary method, the pressure units 30a-d, 32a-d may be operated to lower the pressure rollers 42a, 42b into engagement with the workpieces 36 to forcibly secure the workpieces 36 in their respective positions, such as by clamping or trapping the workpieces 36 between the pressure rollers 42a, 42b and the support table 50. It is contemplated that the pressure units 30a-d, 32a-d may be operated manually, such as in response to operator input via a control device, or automatically, such as at the direction of a preprogrammed, automated controller, for example. Such a controller may receive force measurements from the pressure units 30a-d, 32a-d and may use such measurements to automatically adjust the vertical positions of the pressure rollers 42a, 42b in order to apply a predefined amount of force to the workpieces as described above.

At step 150 of the exemplary method, the welding heads of the welding station 51 (shown in **FIG**. 7) may be activated, thereby welding the workpieces 36 together at starting points along the respective seams 52. With the seam welds initiated thusly, the carriages 24a, 24b of the welding fixture 10 may, at step 160 of the method, be activated to begin moving the welding fixture 10 in the *y*-direction indicated in **FIGS. 1** and **3****.** The welding station 51 may also begin moving in the *y*-direction and may closely follow the welding fixture 10 at a fixed distance as depicted in **FIG. 7****.** As the welding fixture 10 advances along the lengths of the workpieces 36, the pressure rollers 42a, 42b may roll along and forcibly secure respective portions of the workpieces 36 against the support table 50 while the welding heads follow closely behind the pressure rollers 42a, 42b and weld the workpieces 36 together along the seams 52. The portions of the workpieces 36 that are being welded are thereby continuously secured and are prevented from warping or otherwise moving out of position as the welds are being applied by the welding heads. This is accomplished without requiring the workpieces 36 to be entirely clamped in place prior to commencement of welding as is necessary with other welding fixtures. It will therefore be appreciated that the welding fixture 10 of the present disclosure requires relatively little setup and can be adjusted very quickly to accommodate various welding applications.

As used herein, an element or step recited in the singular and proceeded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

While certain embodiments of the disclosure have been described herein, it is not intended that the disclosure be limited thereto. Those skilled in the art will envision other modifications within the scope of the claims appended hereto.

## Claims

1. A fixture (10) for securing a workpiece (36) during friction stir welding, the fixture (10) comprising:
a movable gantry (12) configured to be disposed over first and second workpieces (36) to be joined, the gantry (12) comprising:
a first girder (14) supported by first and second vertical support members (22a, 22b), and
a second girder (16) supported by third and fourth vertical support members (22a, 22b), the first and second girders (14, 16) are oriented parallel to one another; and
a pressure unit (30a-d, 32a-d) attached to the gantry (12) and configured to controllably apply a force to the first and second workpieces (36) during a friction stir welding operation.

2. The fixture (10) of claim 1, wherein the pressure unit (30a-d, 32a-d) is coupled to the first girder (14) or the second girder (16) by a bearing unit (33) configured to allow adjustment of an angular orientation of the pressure unit (30a-d, 32a-d) relative to the first girder (14) or the second girder (16).

3. The fixture (10) of claim 1 or 2, wherein the pressure unit (30a-d, 32a-d) comprises a plurality of pressure units (30a-d, 32a-d) suspended from the first girder (14) or the second girder (16) in a longitudinally-spaced relationship.

4. The fixture (10) of claim 3, wherein the pressure unit (30a-d, 32a-d) comprises a plurality of front pressure units (30a-d) suspended from the first girder (14) in a longitudinally-spaced relationship and a plurality of rear pressure units (32a-d) suspended from the second girder (16) in a longitudinally-spaced relationship.

5. The fixture (10) of any of the preceding claims, wherein the pressure unit (30a-d, 32a-d) comprises a linear actuator (36) having a vertically movable piston (40) configured to controllably impart a vertical force on the workpiece (36), preferably
further comprising a pair of pressure rollers (42a, 42b) rotatably mounted to a lower end of the piston (40).

6. The fixture (10) of any of the preceding claims, wherein the gantry (12) is supported by a motor driven carriage (24a, 24b) that is configured to controllably move the gantry (12) in a welding direction, and/or
further comprising a welding station (51) attached to the gantry (12), the welding station (51) including a welding head positioned behind the pressure unit (30a-d, 32a-d) relative to a welding direction,
preferably wherein the welding head comprises a plurality of longitudinally-spaced welding heads.

7. A method for securing a workpiece (36) during friction stir welding, the method comprising:
positioning a gantry (12) over first and second workpieces (36), the gantry (12) comprising a first girder (14) supported by first and second vertical support members (22a, 22b), and a second girder (16) supported by third and fourth vertical support members (22a, 22b), wherein the first and second girders (14, 16) are oriented parallel to one another;
applying a force to the first and second workpieces (36) using a pressure unit (30a-d, 32a-d) attached to the gantry (12);
moving the gantry (12) over the first and second workpieces (36) while maintaining engagement between the pressure unit (30a-d, 32a-d) and the first and second workpieces (36); and
friction stir welding the workpieces (36) as the gantry (12) is moved.

8. The method of claim 7, having one or more of the following:
wherein the step of applying the force to the first and second workpieces (36) comprises lowering a piston (40) of the pressure unit (30a-d, 32a-d), whereby pressure rollers (42a, 42b) mounted to a lower end of the piston (40) are brought into contact with the workpiece (36),
wherein the step of positioning the gantry (12) over the first and second workpieces (36) comprises moving the gantry (12) to a position in which the first and second girders (14, 16) of the gantry (12) are positioned above the first and second workpieces (36) and the pressure unit (30a-d, 32a-d) is suspended over the first and second workpieces (36),
wherein the step of moving the gantry (12) over the first and second workpieces (36) comprises moving the entire gantry (12) in a welding direction relative to the first and second workpieces (36),
wherein the step of welding comprises friction stir welding the first workpiece (36) and the second workpiece (36) together along a seam (52), preferably
wherein the first workpiece (36) and the second workpiece (36) are welded together using a friction stir welding head disposed behind the pressure unit (30a-d, 32a-d) relative to a welding direction.

9. The method of claim 8, further comprising adjusting a longitudinal position of the pressure unit (30a-d, 32a-d) relative to the gantry (12).

10. The method of claim 8 or 9, further comprising adjusting an angular orientation of the pressure unit (30a-d, 32a-d) relative to the gantry (12).

11. The method of any of the claims 8-10, further comprising securing lateral positions of the first and second workpieces (36) by moving side supports (53) into engagement with lateral edges of the first and second workpieces (36).

12. A method for securing a workpiece according to any of the claims 8-11, using a fixture (10) according to any of the claims 1-7.

## Patentansprüche

1. Vorrichtung (10) zum Sichern eines Werkstücks (36) während eines Rührreibschweißens, wobei die Vorrichtung (10) umfasst:
ein bewegliches Gerüst (12), das konfiguriert ist, um über ein erstes und zweites Werkstück (36), die zu verbinden sind, angeordnet zu werden, wobei das Gerüst (12) umfasst:
einen ersten Träger (14), der von einem ersten und zweiten vertikalen Stützelement (22a, 22b) getragen wird, und
einen zweiten Träger (16), der von einem dritten und vierten vertikalen Stützelement (22a, 22b) getragen wird, wobei der erste und zweite Träger (14, 16) parallel zueinander ausgerichtet sind; und
eine Druckeinheit (30a-d, 32a-d), die an dem Gerüst (12) befestigt ist und die konfiguriert ist, um während eines Rührreibschweißvorgangs eine Kraft auf das erste und zweite Werkstück (36) steuerbar auszuüben.

2. Vorrichtung (10) nach Anspruch 1, bei der die Druckeinheit (30a-d, 32a-d) mit dem ersten Träger (14) oder dem zweiten Träger (16) durch eine Lagereinheit (33), die konfiguriert ist, eine Anpassung einer Winkelorientierung der Druckeinheit (30a-d, 32a-d) relativ zum ersten Träger (14) oder dem zweiten Träger (16) zu ermöglichen, gekoppelt ist.

3. Vorrichtung (10) nach Anspruch 1 oder 2, bei der die Druckeinheit (30a-d, 32a-d) eine Vielzahl von Druckeinheiten (30a-d, 32a-d) umfasst, die am ersten Träger (14) oder am zweiten Träger (16) in einer longitudinal verteilten Beziehung aufgehängt sind.

4. Vorrichtung (10) nach Anspruch 3, bei der die Druckeinheit (30a-d, 32a-d) eine Vielzahl von vorderen Druckeinheiten (30a-d), die am ersten Träger (14) in einer longitudinal verteilten Beziehung aufgehängt sind und eine Vielzahl von hinteren Druckeinheiten (32a-d) umfasst, die am zweiten Träger (14) in einer longitudinal verteilten Beziehung aufgehängt sind.

5. Vorrichtung (10) nach einem der vorhergehenden Ansprüche, bei der die Druckeinheit (30a-d, 32a-d) einen linearen Aktuator (36) umfasst, der einen vertikal beweglichen Kolben (40) aufweist, der konfiguriert ist, um eine vertikale Kraft auf das Werkstück (36) zu erzeugen, bevorzugt,
weiterhin umfassend ein Paar von Druckwalzen (42a, 42b), die drehbar an einem unteren Ende des Kolbens (40) befestigt sind.

6. Vorrichtung (10) nach einem der vorhergehenden Ansprüche, bei der das Gerüst (12) durch einen motorgetriebenen Schlitten (24a, 24b), der konfiguriert ist, um das Gerüst (12) in eine Schweißrichtung zu bewegen, unterstützt wird und/oder
weiterhin umfassend eine Schweißstation (51), die an dem Gerüst (12) angebracht ist, wobei die Schweißstation (51) einen Schweißkopf enthält, der hinter der Druckeinheit (30a-d, 32a-d) relativ zu einer Schweißrichtung positioniert ist,
bevorzugt wobei der Schweißkopf eine Vielzahl von longitudinal verteilte Schweißköpfe umfasst.

7. Verfahren zum Sichern eines Werkstücks (36) während eines Rührreibschweißens, wobei der Verfahren umfasst:
Positionieren eines Gerüsts (12) über ein erstes und zweites Werkstück (36), wobei das Gerüst (12) einen ersten Träger (14), der von einem ersten und zweiten vertikalen Stützelement (22a, 22b) getragen wird und einen zweiten Träger (16), der von einem dritten und vierten vertikalen Stützelement (22a, 22b) getragen wird, umfasst, wobei der erste und zweite Träger (14, 16) parallel zu einander ausgerichtet sind;
Anwenden einer Kraft auf das erste und zweite Werkstück (36) unter Verwenden einer Druckeinheit (30a-d, 32a-d), die an dem Gerüst (12) angebracht ist;
Bewegen des Gerüsts (12) über das erste und zweite Werkstück (36), während ein Eingriff zwischen der Druckeinheit (30a-d, 32a-d) und dem zweiten Werkstück (36) aufrechterhalten wird; und
Rührreibschweißen der Werkstücke (36), wenn das Gerüst (12) bewegt wird.

8. Verfahren nach Anspruch 7, aufweisend eines oder mehrere des Folgenden:
wobei der Schritt des Anwendens der Kraft auf das erste und zweite Werkstück (36) ein Absenken eines Kolbens (40) der Druckeinheit (30a-d, 32a-d) umfasst, wodurch Druckwalzen (42a, 42b), die an einem unteren Ende des Kolbens (40) montiert sind, in Kontakt mit dem Werkstück (36) gebracht werden,
wobei der Schritt des Positionierens des Gerüsts (12) über dem ersten und zweiten Werkstück (36) ein Bewegen des Gerüsts (12) in eine Position umfasst, bei der der erste und zweite Träger (14, 16) des Gerüsts (12) über dem ersten und zweiten Werkstück (36) positioniert werden und die Druckeinheit (30a-d, 32a-d) über dem ersten und zweiten Werkstück (36) aufgehängt wird,
wobei der Schritt des Bewegens des Gerüsts (12) über das erste und zweite Werkstück (36) ein Bewegen des gesamten Gerüsts (12) in eine Schweißrichtung relativ zum ersten und zweiten Werkstück (36) umfasst,
wobei der Schritt des Schweißens ein Rührreibschweißen des ersten Werkstücks (36) zusammen mit dem zweiten Werkstück (36) entlang einer Schweißnaht (52) umfasst, bevorzugt
wobei das erste Werkstück (36) und das zweite Werkstück (36) zusammengeschweißt werden unter Verwendung eines Rührreibschweißkopfs, der hinter der Druckeinheit (30a-d, 32a-d) relativ zu einer Schweißrichtung angeordnet ist.

9. Verfahren nach Anspruch 8, weiterhin umfassend ein Anpassen einer longitudinalen Position der Druckeinheit (30a-d, 32a-d) relativ zu dem Gerüst (12).

10. Verfahren nach Anspruch 8 oder 9, weiterhin umfassend ein Anpassen einer Winkelorientierung der Druckeinheit (30a-d, 32a-d) relativ zu dem Gerüst (12).

11. Verfahren nach einem der Ansprüche 8 - 10, weiterhin umfassend ein Sichern von lateralen Positionen des ersten und zweiten Werkstücks (36) durch ein Bewegen von Seitenträgern (53) in Eingriff mit lateralen Kanten des ersten und zweiten Werkstücks (36).

12. Verfahren zum Sichern eines Werkstücks nach einem der Ansprüche 8 - 11, unter Verwendung einer Vorrichtung (10) nach einem der Ansprüche 1 - 7.

## Revendications

1. Monture (10) de fixation d'une pièce d'ouvrage (36) pour un soudage par friction-malaxage, la monture (10) comprenant :
un portique mobile (12) configuré pour être disposé au-dessus de première et deuxième pièces d'ouvrage (36) à joindre, le portique (12) comprenant :
une première poutre (14) supportée par des premier et deuxième organes de support verticaux (22a, 22b), et
une deuxième poutre (16) supportée par des troisième et quatrième organes de support verticaux (22a, 22b), les première et deuxième poutres (14, 16) étant orientées parallèlement l'une à l'autre ; et
une unité de pression (30a-d, 32a-d) attachée au portique (12) et configurée pour appliquer, de manière commandée, une force aux première et deuxième pièces d'ouvrage (36) pendant une opération de soudage par friction-malaxage.

2. Monture (10) selon la revendication 1, dans laquelle l'unité de pression (30a-d, 32a-d) est couplée à la première poutre (14) ou à la deuxième poutre (16) par une unité de palier (33) configurée pour permettre un ajustement d'une orientation angulaire de l'unité de pression (30a-d, 32a-d) par rapport à la première poutre (14) ou à la deuxième poutre (16).

3. Monture (10) selon la revendication 1 ou 2, dans laquelle l'unité de pression (30a-d, 32a-d) comprend une pluralité d'unités de pression (30a-d, 32a-d) suspendues depuis la première poutre (14) ou la deuxième poutre (16) dans une relation d'espacement longitudinal.

4. Monture (10) selon la revendication 3, dans laquelle l'unité de pression (30a-d, 32a-d) comprend une pluralité d'unités de pression avant (30a-d) suspendues depuis la première poutre (14) dans une relation d'espacement longitudinal et une pluralité d'unités de pression arrière (32a-d) suspendues depuis la deuxième poutre (16) dans une relation d'espacement longitudinal.

5. Monture (10) selon l'une quelconque des revendications précédentes, dans laquelle l'unité de pression (30a-d, 32a-d) comprend un actionneur linéaire (36) ayant un piston mobile verticalement (40) configuré pour exercer, de manière commandée, une force verticale sur la pièce d'ouvrage (36), de préférence
comprenant en outre une paire de galets de pression (42a, 42b) montés, de manière à pouvoir tourner, à une extrémité inférieure du piston (40).

6. Monture (10) selon l'une quelconque des revendications précédentes, dans laquelle le portique (12) est supporté par un chariot motorisé (24a, 24b) qui est configuré pour déplacer, de manière commandée, le portique (12) dans une direction de soudage, et/ou
comprenant en outre un poste de soudage (51) attaché au portique (12), le poste de soudage (51) incluant une tête de soudage positionnée derrière l'unité de pression (30a-d, 32a-d) par rapport à une direction de soudage,
dans laquelle de préférence la tête de soudage comprend une pluralité de têtes de soudage espacées longitudinalement.

7. Procédé de fixation d'une pièce d'ouvrage (36) pour un soudage par friction-malaxage, le procédé comprenant :
le positionnement d'un portique (12) au-dessus de première et deuxième pièces d'ouvrage (36), le portique (12) comprenant une première poutre (14) supportée par des premier et deuxième organes de support verticaux (22a, 22b), et une deuxième poutre (16) supportée par des troisième et quatrième organes de support verticaux (22a, 22b), dans lequel les première et deuxième poutres (14, 16) sont orientées parallèlement l'une à l'autre ;
l'application d'une force aux première et deuxième pièces d'ouvrage (36) en utilisant une unité de pression (30a-d, 32a-d) attachée au portique (12) ;
le déplacement du portique (12) au-dessus des première et deuxième pièces d'ouvrage (36) tout en maintenant la mise en prise entre l'unité de pression (30a-d, 32a-d) et les première et deuxième pièces d'ouvrage (36) ; et
le soudage par friction-malaxage des pièces d'ouvrage (36) au fur et à mesure du déplacement du portique (12).

8. Procédé selon la revendication 7, ayant un ou plusieurs de ce qui suit :
dans lequel l'étape de l'application de la force aux première et deuxième pièces d'ouvrage (36) comprend l'abaissement d'un piston (40) de l'unité de pression (30a-d, 32a-d), de telle manière que des galets de pression (42a, 42b) montés à une extrémité inférieure du piston (40) soient mis en contact avec la pièce d'ouvrage (36),
dans lequel l'étape du positionnement du portique (12) au-dessus des première et deuxième pièces d'ouvrage (36) comprend le déplacement du portique (12) à une position à laquelle les première et deuxième poutres (14, 16) du portique (12) sont positionnées au-dessus des première et deuxième pièces d'ouvrage (36) et l'unité de pression (30a-d, 32a-d) est suspendue au-dessus des première et deuxième pièces d'ouvrage (36),
dans lequel l'étape du déplacement du portique (12) au-dessus des première et deuxième pièces d'ouvrage (36) comprend le déplacement de tout le portique (12) dans une direction de soudage par rapport aux première et deuxième pièces d'ouvrage (36),
dans lequel l'étape du soudage comprend le soudage par friction-malaxage de la première pièce d'ouvrage (36) et de la deuxième pièce d'ouvrage (36) solidairement le long d'un joint (52), de préférence
dans lequel la première pièce d'ouvrage (36) et la deuxième pièce d'ouvrage (36) sont soudées solidairement en utilisant une tête de soudage par friction-malaxage disposée derrière l'unité de pression (30a-d, 32a-d) par rapport à une direction de soudage.

9. Procédé selon la revendication 8, comprenant en outre l'ajustement d'une position longitudinale de l'unité de pression (30a-d, 32a-d) par rapport au portique (12).

10. Procédé selon la revendication 8 ou 9, comprenant en outre l'ajustement d'une orientation angulaire de l'unité de pression (30a-d, 32a-d) par rapport au portique (12).

11. Procédé selon l'une quelconque des revendications 8 à 10, comprenant en outre la fixation de positions latérales des première et deuxième pièces d'ouvrage (36) par le déplacement de supports latéraux (53) pour les mettre en prise avec des bords latéraux des première et deuxième pièces d'ouvrage (36).

12. Procédé de fixation d'une pièce d'ouvrage selon l'une quelconque des revendications 8 à 11, en utilisant une monture (10) selon l'une quelconque des revendications 1 à 7.
